# EUROPÄISCHE PATENTANMELDUNG

(11) **EP 3 495 840 A1**
(43) Veröffentlichungstag der Anmeldung: **12.06.2019**
(21) Anmeldenummer: 18202833.2
(22) Anmeldetag: 26.10.2018
(51) Int. Cl.: G01S 7/41, G01S 5/02, G01S 13/87, G01S 13/89, G01S 13/93

(54) **VERFAHREN UND VORRICHTUNG ZUR EIGENLOKALISIERUNG EINES FAHRZEUGS**

(30) Priorität: 01.12.2017 DE 102017221691
(71) Anmelder: Volkswagen Aktiengesellschaft, 38440 Wolfsburg (DE)
(72) Erfinder: Meysel, Frederik, 38102 Braunschweig (DE); Meinecke, Marc-Michael, 38524 Sassenburg (DE)

(57) **Zusammenfassung**

Bei einem Verfahren und einer Vorrichtung zur Eigenlokalisierung eines Fahrzeugs in seinem Umfeld wird in einem ersten Schritt während der Fahrt des Fahrzeugs die Umgebung mittels einer Umfeldsensorik erfasst und eine Karte erstellt. In einem zweiten Schritt nimmt die Umfeldsensorik Merkmale wahr und vergleicht diese zur Eigenlokalisierung mit der zuvor erstellten Karte. Dabei wird die Umfeldsensorik durch eine Radarsensorik gebildet, wobei zur Erstellung der Karte die Radarsensorik Reflexpunkte ermittelt, nicht-stationäre Reflexpunkte aussortiert und nur stationäre Reflexpunkte verwendet werden, und zur Eigenlokalisierung des Fahrzeugs (1) werden die während der Fahrt ermittelten Reflexpunkte mit denjenigen der Karte verglichen, um die Position des Fahrzeugs in der Karte zu ermitteln.

## Beschreibung

Die Erfindung betrifft ein Verfahren zur Eigenlokalisierung eines Fahrzeugs in seinem Umfeld gemäß dem Oberbegriff des Anspruchs 1 sowie ein entsprechendes Verfahren gemäß dem Oberbegriff des Anspruchs 7.

Diverse Fahrerassistenz- und Automatisierungssysteme einschließlich Systeme zum automatischen Fahren für Fahrzeuge sind bereits in den Markt eingeführt oder befinden sich im Forschungs- oder Entwicklungsstatus. Bei einer Vielzahl dieser Systeme spielt die präzise Lokalisierung des Fahrzeugs eine entscheidende Rolle. Daher werden zunehmend Lokalisierungsalgorithmen erforderlich, die diesen Bedarf adäquat adressieren.

Dabei sind zwei grundsätzliche Arten der Lokalisierung eines Fahrzeugs von Interesse:
- einerseits die Eigenlokalisierung des Fahrzeugs bezüglich eines räumlichen, lokalen Ausschnittes, wie dies beispielsweise beim Einparken in eine Parklücke der Fall ist, und
- andererseits die Eigenlokalisierung des Fahrzeugs bezüglich globaler Koordinaten beziehungsweise bezüglich einer globalen Karte.

In den beiden oben genannten Fällen eignen sich Lokalisierungsansätze, bei denen in zwei Schritten vorgegangen wird.

In einem ersten Schritt wird während der Fahrt des Fahrzeugs die Umgebung mittels einer Umfeldsensorik erfasst und eine Karte erstellt, die die zur Lokalisierung verwendeten Umgebungsmerkmale enthält. Dies können bei optischen Verfahren Bildinhalte sein, die sich leicht wiedererkennen lassen. Bei Ultraschall- oder Lidar-basierten Verfahren wären dies Punkte im Raum, die das ausgesendete Signal zurückwerfen, also Reflexpunkte. Unabhängig von der verwendeten Sensorik wird im ersten Schritt unter Zuhilfenahme von Bewegungsmessungen oder eines Referenzsystems eine Karte erstellt, in der die erkannten Merkmale an den räumlich korrekten Orten verzeichnet sind.

In einem zweiten Schritt nimmt die Sensorik Merkmale wahr und vergleicht diese mit der zuvor erstellten Karte. Unter Ausnutzung vorteilhafter Algorithmen zur Bestimmung der besten Übereinstimmung zwischen aktuell gemessenen Merkmalen und Ausschnitten der Karte wird die Position und Ausrichtung des Beobachters als beste Lösung ermittelt.

Ein Nachteil der bekannten Verfahren besteht darin, dass Wettereinflüsse und wechselnde Lichtbedingungen auf Kameras basierende Messungen stark stören oder sogar unmöglich machen. Messungen mit Ultraschall haben bekanntermaßen eine sehr geringe Reichweite. Lidarmessungen sind auf gute Sichtbedingungen angewiesen und lassen sich durch Sonneneinwirkung oder Nebel stören.

Die Druckschrift DE 10 2007 061 235 A1 betrifft ein Verfahren zur Klassifizierung von Abstandsdaten aus einem Abstandsdetektionssystem und eine korrespondierende Abstandsmessvorrichtung. Durch das Verfahren kann die Höhe der Objekte klassifiziert werden, relativ zu denen der Abstand gemessen wird. Die Klassifikation wird durch die Korrelation der statistischen Streuung mit einer Objekthöhe erreicht.

Die Druckschrift DE 10 2013 015 892 B4 betrifft eine Vorrichtung und ein Verfahren zur Positionsbestimmung eines Fahrzeugs auf oder über einer Planetenoberfläche. Die vorgeschlagene Vorrichtung umfasst ein erstes Mittel zur Bestimmung einer ersten Position P1 (t) des Fahrzeugs, ein zweites Mittel zur Bestimmung einer Bewegungsrichtung BR(t) des Fahrzeugs, ein drittes Mittel zur Bereitstellung einer Anzahl n von Fixpunktdaten, wobei die Fixpunktdaten zumindest für auf der Planetenoberfläche ortsfest angeordnete signifikante Radarobjekte FROi deren Radarsignatur RSFROi und deren Position PFROi angeben, mit i = 1, 2, ... , n, ein Radarsystem mit einem am Fahrzeug angeordneten Radarsensor zur Abtastung einer aktuellen Umgebung des Fahrzeugs mittels Radarstrahlung und zur kontinuierlichen Erfassung dabei gewonnener Radardaten, wobei aus den Radardaten für eine Anzahl m von in der Umgebung vorhandenen Radarobjekten ROk(t) deren Radarsignaturen RSk(t) und deren relative Positionen LIPOk(t) zum Fahrzeug ermittelbar sind, mit k = 0, 1, 2, ... , m, und wobei das Radarsystem zur Ermittlung einer zweiten Position P2(t) ausgeführt und eingerichtet ist, und das erste Mittel derart ausgeführt und eingerichtet ist, dass die erste Position P1 (t) des Fahrzeugs auf Basis der ermittelten zweiten Position P2(t) korrigierbar ist und/oder eine Positionswarnung ausgebbar ist, wenn die erste Position P1 (t) und die zweite Position P2(t) um mehr als ein vorgegebener Grenzwert voneinander abweichen.

Die Druckschrift DE 10 2011 119 762 A1 stellt ein für ein Kraftfahrzeug geeignetes Positionsbestimmungs-System und ein entsprechendes Verfahren bereit. Das System umfasst eine digitale Karte, in der Daten über ortsspezifische Merkmale lokalisiert verzeichnet sind, zumindest eine Umfelderkennungsvorrichtung zur Erfassung der ortsspezifischen Merkmale in der Umgebung des Fahrzeugs und ein mit der digitalen Karte und der Umfelderkennungsvorrichtung gekoppeltes Lokalisierungsmodul. Das Lokalisierungsmodul weist eine Verarbeitungseinheit zum Abgleich der erfassten Daten und der in der digitalen Karte verzeichneten Daten über die ortsspezifischen Merkmale und zur Lokalisierung der Fahrzeugposition anhand der in der digitalen Karte lokalisiert verzeichneten ortsspezifischen Merkmale auf. Ferner umfasst das System eine inertiale Messeinheit des Fahrzeugs für Fahrzeugbewegungsdaten, die mit dem Lokalisierungsmodul gekoppelt ist, dessen Verarbeitungseinheit konfiguriert ist, die Fahrzeugposition mittels der Fahrzeugbewegungsdaten basierend auf der anhand der ortsspezifischen Merkmale lokalisierten Position zu bestimmen.

Für die Steuerung eines automatisch fahrenden Fahrzeugs oder für moderne Sicherheits- und Assistenzfunktionen sind zudem nicht nur die aktuellen Positionen von großem Interesse, sondern gerade auch besonders deren Ableitungen nach der Zeit, also die Geschwindigkeiten sowohl als Änderungen der Position als auch der Ausrichtung, z. B. die Drehgeschwindigkeit um die Hochachse (Gierrate).

Diese sind für viele Anwendungsfälle besonders wichtig, da automatische Regel- und Sicherheitsfunktionen sich auf diese Werte oder sogar deren Ableitungen beziehen (d.h. Beschleunigungen) und nicht etwa auf die statischen Messungen.

Diese Geschwindigkeitsmessungen können mit herkömmlichen Verfahren nur durch Zuhilfenahme weiterer Inertialsensorik, aus den anderen Sensoren nur indirekt bzw. durch Berechnung aus Änderungen von Messwerten bestimmt werden.

Der Erfindung liegt daher die Aufgabe zugrunde, die Eigenlokalisation einschließlich der Bestimmung von Bewegungsgrößen eines Fahrzeugs von störenden Umwelteinflüssen unabhängiger zu machen.

Diese Aufgabe wird durch eine Verfahren zur Eigenlokalisierung eines Fahrzeugs mit den Merkmalen des Anspruchs 1 sowie durch eine entsprechende Vorrichtung mit den Merkmalen des Anspruchs 7 gelöst. Bevorzugte Ausführungsformen der Erfindung sind Gegenstand der Unteransprüche.

Bei dem erfindungsgemäßen Verfahren zur Eigenlokalisierung eines Fahrzeugs in seinem Umfeld wird in einem ersten Schritt während der Fahrt des Fahrzeugs die Umgebung mittels einer Umfeldsensorik erfasst und eine Karte erstellt. In einem zweiten Schritt nimmt die Umfeldsensorik Merkmale wahr und vergleicht diese zur Eigenlokalisierung mit der zuvor erstellten Karte. Dabei wird die Umfeldsensorik durch eine Radarsensorik gebildet, wobei zur Erstellung der Karte die Radarsensorik Reflexpunkte ermittelt, nicht-stationäre Reflexpunkte aussortiert und nur stationäre Reflexpunkte verwendet werden, und zur Eigenlokalisierung des Fahrzeugs werden die während der Fahrt ermittelten Reflexpunkte mit denjenigen der Karte verglichen, um die Position des Fahrzeugs in der Karte zu ermitteln.

Die Eigenlokalisierung des Fahrzeugs auf der Basis von leistungsfähigen Radarsensoren, die vorzugsweise im Mikrowellenfrequenzband arbeiten, hat die Vorteile, dass die Eigenlokalisation unabhängig von Wettergegebenheiten, Lichteinfall, Nebel, Schnee, Regen und/oder Staubentwicklung ist.

Zusätzlich zur Eigenlokalisierung des Fahrzeugs erfolgt vorzugsweise eine Schätzung der Eigenbewegung des Fahrzeugs. Auch diese Schätzung der Eigenbewegung ist unabhängig von den äußeren Umständen wie Wetter, Licht, Nebel, Regen, Schnee oder Staubentwicklung.

Weiter bevorzugt wird durch die Messung der direkten Radialgeschwindigkeit der Reflexpunkte die Eigenbewegung des Fahrzeugs ermittelt. Als ganz besonderer Vorteil der mikrowellenbasierten Lokalisierung erweist sich hier die Messung der Umgebung in verschiedene Blickrichtungen. Durch die direkte Messung der relativen Radialgeschwindigkeiten der Reflexpunkte zum Beobachter kann die Eigenbewegung zuverlässig ermittelt und sogar plausibilisiert werden.

Weiter bevorzugt umfasst die Eigenbewegung des Fahrzeugs zumindest dessen Geschwindigkeit und Beschleunigung. Die robuste Eigenlokalisierung ermöglicht daher direkte Geschwindigkeitsmessungen und deren Ableitungen gegenüber der Umgebung.

Vorzugsweise wird aus unterschiedlichen Relativgeschwindigkeiten der Reflexpunkte in voreinander verschiedenen Blickrichtungen die Drehung des Fahrzeugs ermittelt, wobei insbesondere aus der Drehung des Fahrzeugs die Gierrate bestimmt werden kann. Es ist bekannt, dass bei Drehbewegungen und Kurvenfahrten die aus dem Stand der Technik bekannten Systeme besonders fehleranfällig sind. Radarbasierte Merkmalsmessungen wirken sich demgegenüber besonders vorteilhaft aus. Werden im Umfeld des Beobachters in verschiedenen Blickrichtungen einheitlich unterschiedliche Relativgeschwindigkeiten erfasst, kann die resultierende Drehung und damit die Gierrate aus diesen berechnet werden

Die erfindungsgemäße Vorrichtung zur Eigenlokalisierung eines Fahrzeugs in seinem Umfeld, wobei die Vorrichtung zur Durchführung des im Vorangegangenen erläuterten Verfahrens ausgelegt und eingerichtet ist, umfasst
- eine Umfeldsensorik zur Erfassung des Umfelds des Fahrzeugs während der Fahrt,
- eine Einrichtung zur Erstellung einer Karte des erfassten Umfelds, und
- einer Einrichtung zur Bestimmung der Position des Fahrzeugs basierend auf der Karte und den Daten der Umfeldsensorik, wobei
- die Umfeldsensorik durch eine Radarsensorik gebildet wird, die stationäre Reflexpunkte bestimmt,
- die Karte aus den ermittelten stationären Reflexpunkten von der Einrichtung zur Erstellung der Karte des Umfelds erstellt, und
- die während der Fahrt ermittelten Reflexpunkte mit denjenigen der Karte von der Einrichtung zur Bestimmung der Position des Fahrzeugs verglichen werden, um die Position des Fahrzeugs in der Karte zu ermitteln.

Weiter bevorzugt weist die Vorrichtung eine Einrichtung zur Bestimmung der Eigenbewegung des Fahrzeugs aus den während der Fahrt erkannten Reflexpunkten auf.

Vorzugsweise werden Drehbewegungen des Fahrzeugs von der Einrichtung zur Bestimmung der Eigenbewegung des Fahrzeugs bestimmt.

Die Vorteile der Radarmessungen zur Eigenlokalisation eines Fahrzeugs sind wie folgt:
- Unabhängigkeit der Messung der Eigenbewegungsschätzung vom Wettergegebenheiten, Lichteinfall, Nebel- oder Staubentwicklung,
- aufgrund der typischerweise gegebenen präzisen Auflösung (und auch Genauigkeit) der Radarmessung in Bezug auf Zielentfernung und Zielgeschwindigkeit ergeben sich sehr präzise Eigenbewegungsschätzungen,
- aufgrund der hohen Wiedererkennungswahrscheinlichkeit von stationären Objektreflexionszentren (selbst unter schlechten Wetterbedingungen) eignet sich das Verfahren sehr gut für eine robuste Lokalisierung in einer vorher aufgenommenen Karte, und
- Geschwindigkeit und Drehraten des Fahrzeugs können durch Messungen in verschiedene Blickrichtungen bereits mit einem Einzelsensor bestimmt und plausibilisiert werden.

Eine bevorzugte Ausführungsform der Erfindung wird nachfolgend anhand der Zeichnungen erläutert. Dabei zeigt
- Fig. 1: einen Einparkvorgang basierend auf der Eigenlokalisierung in einem nahen lokalen Umfeld,
- Fig. 2: die Lokalisierung eines Fahrzeugs bezüglich einer globalen Karte,
- Fig. 3: mit einem Radarsensor zur Eigenlokalisierung ausgestattetes Fahrzeug,
- Fig. 4: ein Beispiel einer Konstellation von Radarreflexpunkten, und
- Fig. 5: die Vorrichtung zur Eigenlokalisation des Fahrzeugs in schematischer Darstellung.

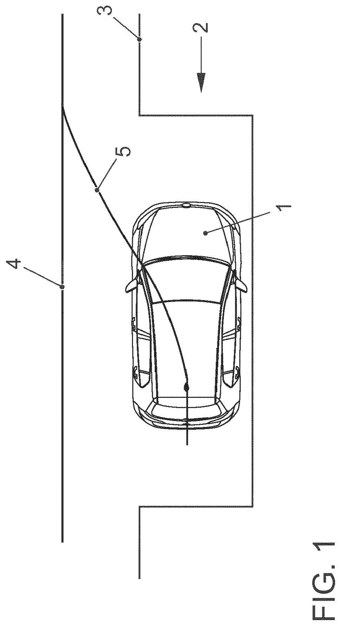

Fig. 1 zeigt eine lokale Eigenlokalisierung eines Kraftfahrzeugs 1 am Beispiel eines automatischen oder assistierten Einparkvorgangs in eine Parklücke 2, die hier durch eine Begrenzung 3 symbolisiert ist. Während einer Vorbeifahrt 4 entlang der Parklücke 2 erfasst eine Umfeldsensorik (nicht dargestellt) des Fahrzeugs 1 den Beginn, die Länge, die Tiefe und das Ende der Parklücke 2 relativ zum Fahrzeug 1. Basierend auf dieser Eigenlokalisierung des Fahrzeugs berechnet das Einparksystem eine Einparktrajektorie 5, entlang der das Fahrzeug 1 in die Parklücke 2 einparkt.

Mit anderen Worten, es wird eine Umgebungskarte, nämlich die Parklücke 2, aus den Daten der Umfeldsensorik erstellt. Während des Einparkvorgangs entlang der Einparktrajektorie 5 wird die während der Vorbeifahrt 4 erstellte Karte mit aktuellen Umfeldmessungen verglichen, um den aktuellen Standort des Fahrzeugs 1 entlang der Trajektorie 5 bestimmen zu können.

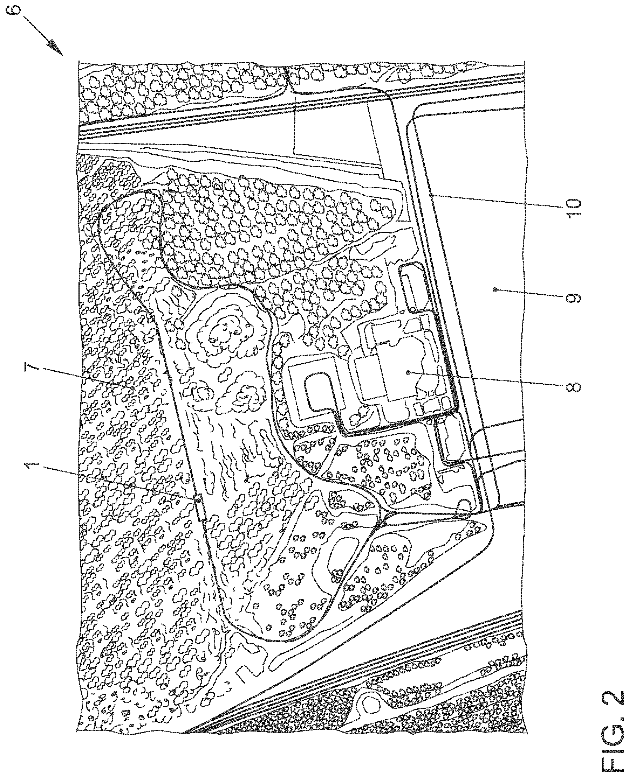

Fig. 2 zeigt die Eigenlokalisierung eines Fahrzeugs bezüglich globaler Koordinaten bzw. bezüglich einer globalen Karte . Das Fahrzeug 1 bewegt sich in einem Umfeld 6, beispielsweise einem Testgelände, umfassend ein Waldgebiet 7 mit einer Gebäudestruktur 8 und einer mit Belag versehenen Freifläche 9. In diesem Umfeld 6 hat sich das Fahrzeug 1 entlang der in Fig. 2 eingezeichneten Trajektorien 10 bewegt und mittels einer Umfeldsensorik eine Karte erstellt, so dass in einem zweiten Schritt die aktuelle Position des Fahrzeugs 1 in dem Waldgebiet 7 anhand eines Vergleichs von aktuellen Merkmalen der Umfeldsensorik mit der erstellten Karte ermittelt werden kann.

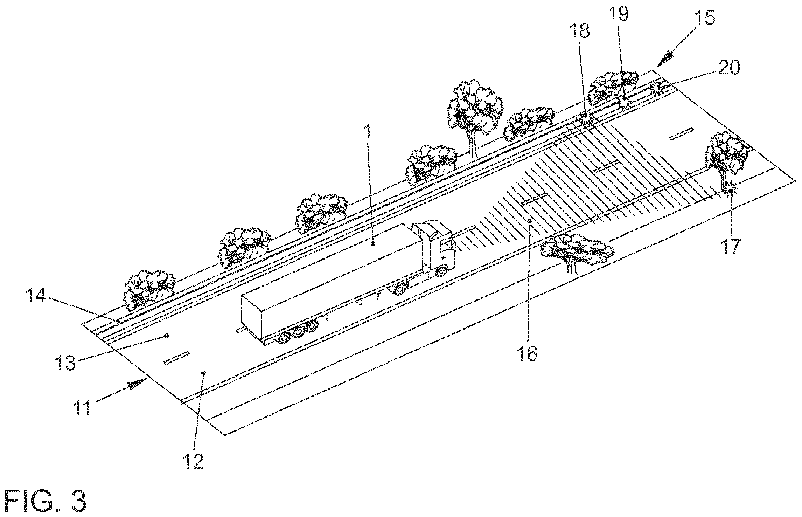

Fig. 3 zeigt die Nutzung von Radarsensorik als Lokalisierungssensor. Sowohl die Lokalisierungskarte im ersten Schritt als auch die eigentliche Messung zur Ortung des Fahrzeugs wird durch mikrowellenbasierte Radarmessungen realisiert. Im Beispiel bewegt sich das Fahrzeug 1, hier in der Form eines Lastkraftwagens, auf einer zweispurigen Fahrbahn 11, die Bestandteil einer Autobahn ist, wobei die Fahrbahn 11 eine rechte Spur 12 und eine linke Spur 13 aufweist und die zweispurige Fahrbahn 11 zur Abgrenzung links von der linken Spur 13 ein Leitplankensystem 14 auf dem Mittelstreifen 15 aufweist.

Dabei sind am Fahrzeug 1 ein oder mehrere Radarsensoren (nicht dargestellt) installiert, deren Sichtbereich 16 schematisch in Fahrtrichtung nach vorne dargestellt ist. In diesem Sichtbereich 16 sind am Rand der Fahrbahn 11 mehrere Reflexpunkte 17, 18, 19, 20 vorhanden, die von Beobachtung zu Beobachtung stabil sind und mit hoher Wahrscheinlichkeit wieder gefunden werden können. Da diese Reflexpunkte 17 bis 20 wiederauffindbar sind und deren Position sich über die Zeit mit hoher Wahrscheinlichkeit nicht verändert, kann mit Hilfe der Reflexpunkte 17 bis 20 eine Karte erstellt werden, die sich zur Eigenlokalisation des Fahrzeugs 1 eignet.

Bereits bei der Erstellung der Karte aus den Reflexpunkten 17 bis 20 wird eine besondere Eigenschaft von Radarmessungen ausgenutzt. Da aus diesen Messungen auch Geschwindigkeiten direkt ableitbar sind, können nicht-stationäre Objekte schon in diesem Schritt erkannt und aussortiert werden und gelangen somit nicht in die Umfeldkarte zur Eigenlokalisation.

Da die Reflexpunkte 17 bis 20 folglich stationär sind, können sie im zweiten Schritt zur Eigenlokalisierung herangezogen werden. Zunächst kann durch Messung mehrerer Reflexpunkte 17 bis 20 ein Vergleich mit der Karte gezogen werden und die Position des Fahrzeugs in der Karte ermittelt werden. Je mehr Reflexpunkte 17 bis 20 von stationären Objekten von Messung zu Messung eindeutig wieder gefunden werden, desto genauer wird zusätzlich die Eigenbewegungsschätzung innerhalb dieser Zeitintervalls. Zusätzlich ist die Genauigkeit der Eigenbewegungsschätzung auch von der Genauigkeit der Messung an sich abhängig. Die Eigenbewegungsschätzung für das betrachtete Zeitintervall Δ*T* ergibt einen Vektor mit den Elementen (Δ*x*, Δ*y*, Δ*ϕ*)*^{T}*, wobei wie üblich die x-Achse in Fahrtrichtung zeigt, die y-Achse senkrecht dazu angeordnet ist und *ϕ* der Azimut eines Objekts gegenüber der x-Achse ist.

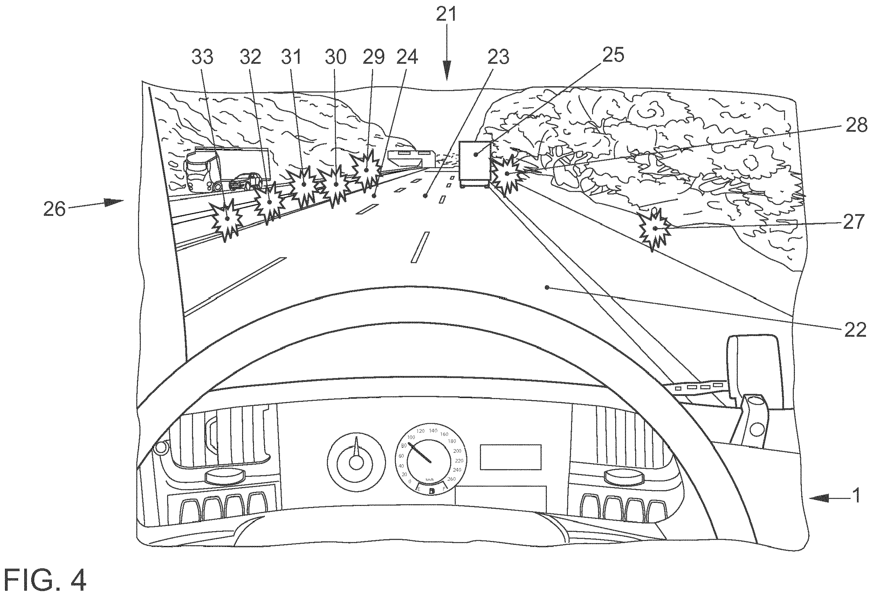

Fig. 4 zeigt ein Beispiel einer aufgezeichneten Reflexpunktkarte in einem Autobahnszenario, wobei die Fig. 4 den Blick nach vorne aus einem Fahrzeug 1 heraus zeigt. Dabei bewegt sich das Fahrzeug 1 auf der Fahrbahn 21 einer Autobahn mit einer rechten Fahrspur 22, einer mittleren Fahrspur 23 und einer linken Fahrspur 24. Vor dem Fahrzeug 1 fährt auf der gleichen rechten Fahrspur 22 ein Lastkraftwagen 25. Ferner ist in Fig. 4 der Gegenverkehr 26 auf der entgegengesetzten Fahrbahn erkennbar. Stationäre Objekte wie beispielsweise Bäume, charakteristische Punkte am Boden, Laternen, Leitplankenpfosten, Gullideckel, etc. verbleiben über sehr lange Zeiten am gleichen Ort und somit in vorteilhafter Weise für die Eigenlokalisierung herangezogen werden. In Fig. 4 sind derartige stationäre Objekte als Reflexpunkte 27 bis 33 dargestellt.

Als ganz besonderer Vorteil der mikrowellenbasierten Lokalisierung erweist sich die Messung der Umgebung in verschiedene Blickrichtungen. Durch die direkte Messung der relativen Radialgeschwindigkeiten der Reflexpunkte 27 bis 33 zum Beobachter, also der Radareinrichtung des Fahrzeugs 1, kann neben der Eigenlokalisierung die Eigenbewegung des Fahrzeugs zuverlässig ermittelt und sogar plausibilisiert werden.

Treten während der Messung einzelne Reflexpunkte 27 bis 33 hinsichtlich ihrer relativen Geschwindigkeiten aus ihrer Gruppe abweichend hervor, können diese als nicht-stationäre Objekte erkannt und verworfen werden.

Bei Drehbewegungen und Kurvenfahrten sind die aus dem Stand der Technik bekannten Systeme besonders fehleranfällig. Radarbasierte Merkmalsmessungen wirken sich hier besonders vorteilhaft aus: Werden im Umfeld des Beobachters in verschiedenen Blickrichtungen einheitlich unterschiedliche Relativgeschwindigkeiten erfasst, kann die resultierende Eigenbewegung, wie beispielsweise eine Drehung, aus diesen berechnet werden.

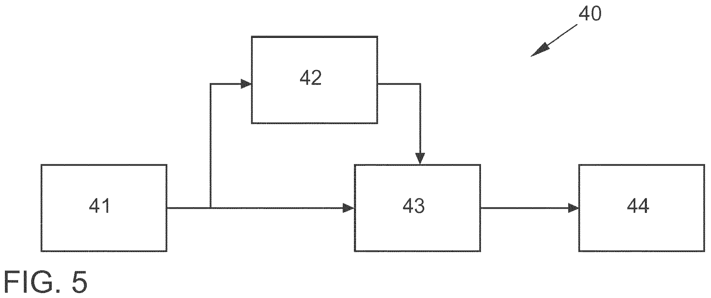

Fig. 5 zeigt die Vorrichtung 40 zur Eigenlokalisation eines Fahrzeugs in schematischer Darstellung. Die Eigenlokalisationsvorrichtung 40 umfasst eine Radarsensorik 41 mit mindestens einem Radarsensor, der vorzugsweise im Mikrowellenlängenbereich arbeitet. In der Radarsensorik 41 werden reflektierten Signale separiert in Signale die stationären und nichtstationären Objekten zugeordnet werden und als Reflexpunkte bezeichnet werden. Die Signale stationärer Objekte bilden die stationären Reflexpunkte, die in der Karteneinrichtung 42 zur Erstellung einer Karte des Umfeldes des Fahrzeugs verwendet werden. Aktuell gemessene stationäre Reflexpunkte werden einer Einrichtung 43 zur Bestimmung der Position des Fahrtzeugs zugeführt, die diese Signale mit der Karte der Karteneinrichtung 42 vergleicht, um die Position des Fahrzeugs in der Karte zu ermitteln. In einer nachfolgenden Einrichtung 44 zur Bestimmung der Eigenbewegung wird anhand der aktuellen und vorherigen Reflexpunkten die Eigenbewegung des Fahrzeugs bestimmt, wobei die Position des Fahrzeugs in die Bestimmung einfließen kann.

### Bezugszeichenliste

- 1: Fahrzeug
- 2: Parklücke
- 3: Parklückenbegrenzung
- 4: Vorbeifahrt
- 5: Einparktrajektorie
- 6: Umfeld
- 7: Waldgebiet
- 8: Gebäudestruktur
- 9: Freifläche
- 10: aufgezeichnete Fahrtrajektorien
- 11: Fahrbahn
- 12: rechte Fahrspur
- 13: linke Fahrspur
- 14: Leitplankensystem
- 15: Mittelstreifen
- 16: Sichtbereich
- 17: Reflexpunkt
- 18: Reflexpunkt
- 19: Reflexpunkt
- 20: Reflexpunkt
- 21: Fahrbahn
- 22: rechte Fahrspur
- 23: mittlere Fahrspur
- 24: linke Fahrspur
- 25: vorausfahrender Lastkraftwagen
- 26: Gegenverkehr auf der Gegenfahrbahn
- 27: Reflexpunkt
- 28: Reflexpunkt
- 29: Reflexpunkt
- 30: Reflexpunkt
- 31: Reflexpunkt
- 32: Reflexpunkt
- 33: Reflexpunkt

- 40: Vorrichtung zur Eigenlokalisation
- 41: Radarsensorik
- 42: Einrichtung zur Erstellung einer Karte
- 43: Einrichtung zur Bestimmung der Position des Fahrzeugs
- 44: Einrichtung zur Bestimmung der Eigenbewegung

## Patentansprüche

1. Verfahren zur Eigenlokalisierung eines Fahrzeugs (1) in seinem Umfeld, wobei in einem ersten Schritt während der Fahrt des Fahrzeugs die Umgebung mittels einer Umfeldsensorik erfasst und eine Karte erstellt wird, und
in einem zweiten Schritt die Umfeldsensorik Merkmale wahrnimmt und diese zur Eigenlokalisierung mit der zuvor erstellten Karte vergleicht,
**dadurch gekennzeichnet, dass**
die Umfeldsensorik durch eine Radarsensorik gebildet wird, wobei zur Erstellung der Karte die Radarsensorik Reflexpunkte (17 - 20, 27 - 33) ermittelt, nicht-stationäre Reflexpunkte aussortiert werden und nur stationäre Reflexpunkte zur Erstellung der Karte verwendet werden, und
zur Eigenlokalisierung des Fahrzeugs (1) während der Fahrt ermittelte Reflexpunkte (17 - 20, 27 - 33) mit denjenigen der Karte verglichen werden, um die Position des Fahrzeugs (1) in der Karte zu ermitteln.

2. Verfahren nach Anspruch 1, **dadurch gekennzeichnet, dass** zusätzlich zur Eigenlokalisierung eine Schätzung der Eigenbewegung des Fahrzeugs (1) erfolgt.

3. Verfahren nach Anspruch 2, **dadurch gekennzeichnet, dass** durch die Messung der direkten Radialgeschwindigkeit der Reflexpunkte die Eigenbewegung des Fahrzeugs (1) ermittelt wird.

4. Verfahren nach Anspruch 3, **dadurch gekennzeichnet, dass** die Eigenbewegung des Fahrzeugs (1) zumindest dessen Geschwindigkeit und Beschleunigung umfasst.

5. Verfahren nach einem der Ansprüche 2 bis 4, **dadurch gekennzeichnet, dass** aus unterschiedlichen Relativgeschwindigkeiten der Reflexpunkte (17 - 20, 27 - 33) in voreinander verschiedenen Blickrichtungen die Drehung des Fahrzeugs (1) ermittelt wird.

6. Verfahren nach Anspruch 5, **dadurch gekennzeichnet, dass** aus der Drehung des Fahrzeugs die Gierrate bestimmt wird.

7. Vorrichtung (40) zur Eigenlokalisierung eines Fahrzeugs (1) in seinem Umfeld, wobei die Vorrichtung zur Durchführung des Verfahrens nach einem der vorangegangenen Ansprüche ausgelegt und eingerichtet ist, mit
einer Umfeldsensorik (41) zur Erfassung des Umfelds des Fahrzeugs während der Fahrt,
einer Einrichtung (42) zur Erstellung einer Karte des erfassten Umfelds, und
einer Einrichtung (43) zur Bestimmung der Position des Fahrzeugs basierend auf der Karte des erfassten Umfelds und den Daten der Umfeldsensorik (41),
**dadurch gekennzeichnet, dass**
die Umfeldsensorik (41) durch eine Radarsensorik gebildet wird, wobei die Radarsensorik stationäre Reflexpunkte (17 - 20, 27 - 33) bestimmt,
die Karte aus den ermittelten stationären Reflexpunkten von der Einrichtung (42) zur Erstellung der Karte des Umfelds erstellt wird, und
die während der Fahrt ermittelten Reflexpunkte (17 - 20, 27 - 33) mit denjenigen der Karte von der Einrichtung (43) zur Bestimmung der Position des Fahrzeugs (1) verglichen werden, um die Position des Fahrzeugs (1) in der Karte zu ermitteln.

8. Vorrichtung nach Anspruch 7, **dadurch gekennzeichnet, dass** die Vorrichtung eine Einrichtung (44) zur Bestimmung der Eigenbewegung des Fahrzeugs aus den während der Fahrt erkannten Reflexpunkten aufweist.

9. Vorrichtung nach Anspruch 8, **dadurch gekennzeichnet, dass** Drehbewegungen des Fahrzeugs (1) von der Einrichtung (44) zur Bestimmung der Eigenbewegung des Fahrzeugs (1) bestimmt werden.
